# EUROPÄISCHE PATENTANMELDUNG

(11) **EP 1 806 546 A2**
(43) Veröffentlichungstag der Anmeldung: **11.07.2007**
(21) Anmeldenummer: 06026990.9
(22) Anmeldetag: 28.12.2006
(51) Int. Cl.: F24J 2/52, H01L 31/048

(54) **Variabler (Aluminium-) Montagesattel für Stockschrauben zur Befestigung von Solaranlagen auf Hausdächern**

(30) Priorität: 04.01.2006 DE 202006000056 U
(71) Anmelder: Kaack, Peter, 26386 Wilhelmshaven (DE)
(72) Erfinder: Kaack, Peter, 26386 Wilhelmshaven (DE)
(74) Vertreter: Ellberg, Nils

(57) **Zusammenfassung**

Die Erfindung betrifft einen variablen (Aluminium-) Montagesattel (10) für Stockschrauben (22) zur Befestigung von Solaranlagen auf Hausdächern,

Erfindungsgemäß ist vorgesehen, dass er aus drei (Aluminium-) Teilen besteht, nämlich einer oberen Platte (12), einer unteren Platte (14) und einem Sattel (16), die mittels einer Fixier-Schraube (18) mit einer Gewindehülse (20) verbunden werden.

Der Erfindung liegt die Idee zugrunde, einen Montagesattel für eine Rahmenkonstruktionen aus Aluminium zu schaffen, der direkt, senkrecht von oben auf die Stockschraube aufgeschraubt werden kann

## Beschreibung

Die Erfindung betrifft einen variablen (Aluminium-) Montagesattel für Stockschrauben zur Befestigung von Solaranlagen auf Hausdächern, gemäß dem Oberbegriff des Anspruchs 1.

Zur Befestigung von Solarmodulen bzw. Photovoltaikanlagen auf Dächern kommen in der Praxis häufig Stockschrauben zum Einsatz, die in die Dachsparren eingeschraubt werden. Diese Stockschrauben gibt es z.B. mit Gewindedurchmessern M8, M10, M12, M14 und M16. Auf diesen Stockschrauben werden dann mittels "Montageplatten" die Rahmenkonstruktionen befestigt, welche die Unterkonstruktion der Photovoltaikanlage darstellen.

Hiervon ausgehend liegt der Erfindung die Aufgabe zugrunde bekannte Befestigungsmittel weiterzuentwickeln.

Zur Lösung dieser Aufgabe wird ein Montagesattel gemäß Anspruch 1 vorgeschlagen. Es ist demnach vorgesehen, dass der Montagesattel aus drei (Aluminium-) Teilen besteht, nämlich einer oberen Platte, einer unteren Platte und einem Sattel, die mittels einer Fixier-Schraube mit einer Gewindehülse verbunden werden.

Der im Anspruch 1 angegebenen Erfindung liegt die Idee zugrunde, einen "Montagesattel" für die Rahmenkonstruktionen aus Aluminium zu schaffen, der "direkt", senkrecht von oben auf die Stockschraube aufgeschraubt werden kann. Dieses wird mit den in Schutzanspruch 1 aufgeführten Merkmalen gelöst.

Gemäß einer bevorzugten Weiterbildung der Erfindung ist vorgesehen, dass die obere Platte des Montagesattels 50 mm lang ist, 20 mm breit ist, eine 13 mm Bohrung hat. Eine weitere Besonderheit besteht darin, dass die obere Platte auf der oberen Seite eine Riffelung hat und die untere Seite um 40° nach außen gewölbt ist.

Gemäß einer anderen bevorzugten Weiterbildung der Erfindung ist vorgesehen, dass die untere Platte des Montagesattels 50 mm lang ist, 20 mm breit ist, eine 13 mm Bohrung hat. Eine weitere Besonderheit besteht darin, dass die obere Seite um 47° nach innen gewölbt ist und die untere Seite eine Riffelung hat.

Gemäß einer dritten bevorzugten Weiterbildung der Erfindung ist vorgesehen, dass der Sattel des Montagesattels 50 mm lang ist, 140 mm breit ist, an den beiden äußeren Flächen jeweils ein 11 mm Langloch hat, das mittlere Teil eine Innenwölbung von 40° bis 40,5° und eine Außenwölbung von 46,5° bis 47° hat und dass dieses mittlere Teil ein 13 mm Langloch hat, wobei beide Wölbungsflächen ebenfalls mit einer Riffelung versehen sind. '

Bevorzugte Weiterbildungen der Erfindung ergeben sich aus den Unteransprüchen, der Zeichnung und der Beschreibung im Übrigen.

Eine bevorzugte Ausführungsform der Erfindung wird nachfolgend anhand der Zeichnung erläutert. In dieser zeigen:
- Fig. 1: eine obere Platte eines Montagesattels in räumlicher Darstellung,
- Fig. 2: einen Sattel eines Montagesattels in räumlicher Darstellung,
- Fig. 3: eine untere Platte eines Montagesattels in räumlicher Darstellung, und
- Fig. 4: einen montierten Montagesattel in einer Seitenansicht.

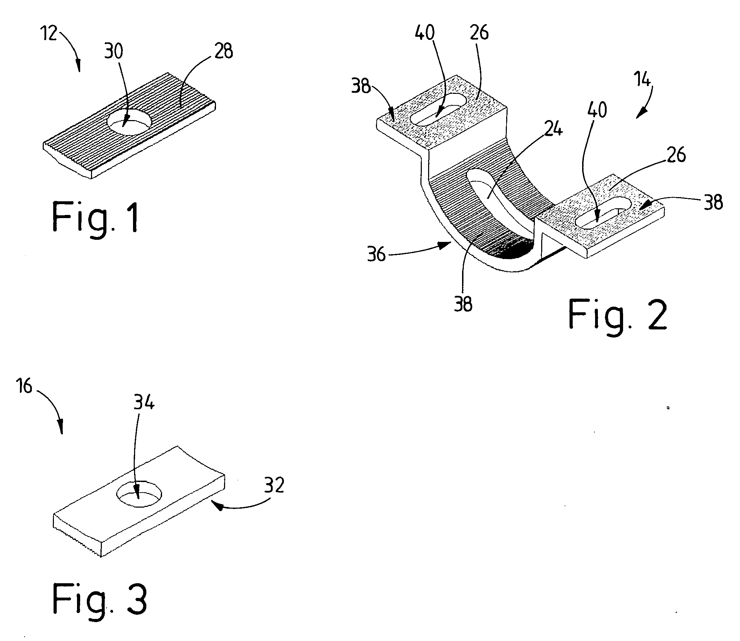

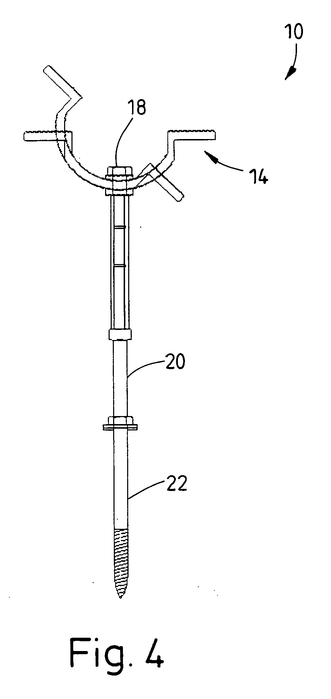

Der in Fig. 4 gezeigte Montagesattel 10 besteht aus 5 verschiedenen Teilen. 3 Aluminiumteile (obere Platte 12, Sattel 14 und untere Platte 16 abgebildet in Fig. 1, Fig. 2 und Fig. 3) werden mittels einer Fixier-Schraube 18, in erster Linie M10 und M12 verbunden und auf eine entsprechende Gewindehülse 20 in dazu passender Größe geschraubt.

Dieser Montagesattel 10 wird nun auf mittels der Gewindehülse 20 auf eine marktübliche Stockschraube 22 geschraubt. Bei Bedarf kann die Stockschraube 22 auch vorher durch eine Gewindestange und eine weitere Gewindehülse verlängert werden. In diesem Fall wird der Montagesattel 10 dann auf die Gewindestange geschraubt.

Bei gelöster Fixier-Schraube 18 kann der Sattel 14 auf der Stockschraube 22 aufgrund des Langlochs 24 M13 verschoben werden. Er behält seine Position direkt senkrecht auf der Stockschraube 22, jedoch können die seitlichen Flächen 26 des Sattels 14 so stufenlos zwischen 0° und 45° bezogen auf die Dachunterlage eingestellt werden. Diesen Sachverhalt soll Fig.4 verdeutlichen.

### Bezugszeichenliste:

10 Montagesattel
11
12 obere Platte
13
14 Sattel
15
16 untere Platte
17
18 Fixier-Schraube
19
20 Gewindehülse
21
22
23
24 Langloch
25
26 äußere Flächen
27
28 Riffelung
29
30 Bohrung
31
32 Riffelung
33
34 Bohrung
35
36 mittlerer Teil
37
38 Riffelung
39
40 Langloch

## Patentansprüche

1. Variabler (Aluminium-) Montagesattel (10) für Stockschrauben (22) zur Befestigung von Solaranlagen auf Hausdächern, **dadurch gekennzeichnet, dass** er aus drei (Aluminium-) Teilen besteht, nämlich einer oberen Platte (12), einer unteren Platte (14) und einem Sattel (16), die mittels einer Fixier-Schraube (18) mit einer Gewindehülse (20) verbunden werden.

2. Variabler Montagesattel (10) nach Anspruch 1, **dadurch gekennzeichnet, dass** die obere Platte (12) auf einer oberen Seite eine Riffelung (28) hat und eine untere Seite um 40° nach außen gewölbt ist.

3. Variabler Montagesattel nach Anspruch 1 oder 2, **dadurch gekennzeichnet, dass** die obere Platte (12) 50 mm lang ist, 20 mm breit ist, eine 13 mm Bohrung (30) hat,

4. Variabler Montagesattel nach einem der vorhergehenden Ansprüche, **dadurch gekennzeichnet, dass** eine obere Seite der unteren Platte (16) um 47° nach innen gewölbt ist und eine untere Seite eine Riffelung (32) hat.

5. Variabler Montagesattel (10) nach einem der vorhergehenden Ansprüche, **dadurch gekennzeichnet, dass** die untere Platte (16) des Montagesattels 50 mm lang ist, 20 mm breit ist, eine 13 mm Bohrung (34) hat,

6. Variabler Montagesattel nach einem der vorhergehenden Ansprüche, **dadurch gekennzeichnet, dass** der Sattel (14) des Montagesattels in einem mittleren Teil (36) eine Innenwölbung von 40° bis 40,5° und eine Außenwölbung von 46,5° bis 47° aufweist, wobei beide Wölbungsflächen mit einer Riffelung (38) versehen sind

7. Variabler Montagesattel nach einem der vorhergehenden Ansprüche, **dadurch gekennzeichnet, dass** der Sattel (14) 50 mm lang ist, 140 mm breit ist, an zwei äußeren Flächen (26) beidseits des mittleren Teils (36) jeweils ein 11 mm Langloch (40) hat und dass dieses mittlere Teil (36) ein 13 mm Langloch (24) aufweist.
